# EUROPEAN PATENT APPLICATION

(11) **EP 3 012 011 A1**
(43) Date of publication of application: **27.04.2016**
(21) Application number: 15180841.7
(22) Date of filing: 12.08.2015
(51) Int. Cl.: B01D 53/56, B01D 53/60, B01D 53/64, B01D 53/73, B01D 53/75, B01D 53/76, B01D 53/78, B01D 53/83, F01N 3/18, F23J 15/02, F23J 15/04

(54) **METHOD AND APPARATUS FOR PARTIAL REMOVAL OF CONTAMINANTS FROM PROCESS GAS STREAM**

(30) Priority: 21.10.2014 US 201414121820
(71) Applicant: Linde Aktiengesellschaft, 80331 München (DE)
(72) Inventor: SUCHAK, Naresh J., deceased (US)
(74) Representative: Hofmann, Andreas

(57) **Abstract**

In order to overcome the limitations and problems that earlier methods for the partial removal of contaminants from a process gas stream have experienced, the following method steps are proposed:
comprising the steps of:
- conveying the process gas stream (12; 30; 44; 59; 72; 85) to an inlet (14) of a scrubber (10; 38; 58; 65; 74; 93), in particular of a horizontal wet spray scrubber (10; 74),
- distributing the process gas stream (12; 30; 44; 59; 72; 85) evenly across the inlet (14) of the scrubber (10; 38; 58; 65; 74; 93), in particular evenly throughout the width of the inlet (14) of the scrubber (10; 38; 58; 65; 74; 93),
- forming at the the inlet (14) of the scrubber (10; 38; 58; 65; 74; 93) a flow pattern of a plurality of process gas streams partitioned from one another,
- feeding ozone (32; 46; 61; 76; 91) into contact with selected ones of the partitioned gas streams in the scrubber (10; 38; 58; 65; 74; 93) to oxidize contaminants in the partitioned gas streams, in particular for treating a preselected percentage of the process gas stream (12; 30; 44; 59; 72; 85) entering the scrubber (10; 38; 58; 65; 74; 93),
- removing the oxidized contaminants from the selected partitioned gas stream, and
- recombining the selected partitioned gas streams substantially free of contaminants with the remaining partitioned gas streams containing contaminants.

## Description

The present invention provides for removing contaminants, such as nitrogen oxides, sulphur oxides, particulates, heavy metals and other acid gases, from gas streams arising from chemical, metallurgical, partial and full combustion processes, as for example, exhaust streams generated exhausts from engines or boilers on mobile sources such as sea going, naval or other vessels.

### Technological background of the present invention

The use of ozone for oxidizing nitrogen oxides is described in US 5 206 002, in US 6 162 409, in US 6 649 132 B1 and in US 7 303 735 B2. These chemistries and techniques are directed towards high levels of nitrogen oxides removal (around ninety percent) and require 1.5 moles of ozone per mole of nitrogen oxide present in the gas stream. Configuring these processes to operate at lower levels of nitrogen oxides removal causes both economic and process challenges.

Combustion and chemical processes generally result in gas streams containing contaminants that need cleanup before being exhausted to the atmosphere.

Many industrial processes, power generating utilities, combustion sources, stationary and mobile sources such as engines, boilers, kilns and the like use solid fuels or low cost hydrocarbon fuels that contain sulphur, chlorine, nitrogen and metal compounds in hydrocarbons which result in exhaust gases that contain contaminants such as acid gases, particulate matter and heavy metals.

To comply with stricter environmental rules mandated by legislation and a greater concern for the environment, combinations of scrubbing (wet or dry) and particulate capture devices such as electrostatic precipitators (ESP), wet ESP and bag house are increasingly preferred for emissions control of acid gas and particulate matters.

Nitrogen oxides found in most combustion exhaust streams are in the form of nitric oxide (NO), which is mostly insoluble in water and not very reactive. Nitric oxide is not removed by most wet or dry scrubber capture devices.

Therefore, to control nitrogen oxides emissions, the two major options are to lower nitrogen oxides formation at the source by modifying combustion or secondly treating nitrogen oxides in the exhaust gas stream using post combustion techniques.

Primary techniques used for reducing nitrogen oxides formation by modifying combustion are low nitrogen oxides burner (LNB), flue gas recirculation (FGR), staged combustion and over fire air (OFA).

In most applications, these technologies are not adequate for removing nitrogen oxides from combustion gas streams and post combustion techniques, such as selective catalytic reduction (SCR) and selective non-catalytic reduction (SNCR), become necessary to achieve the desired nitrogen oxides reduction.

Both SCR and SNCR processes realize good results but also have limitations. Ozone based oxidation technologies have recently gained success as an alternative post combustion technique, especially when an application is not suitable for SCR.

Ozone based processes as described in US 5 206 002, in US 6 162 409 and in US 7 303 735 B2 provide multi-pollutant removal approaches, and they have been implemented on flue gases that arise from gas and coal fire boilers removing multiple pollutants including nitrogen oxide, sulphur oxides, particulates, etc.

Ozone based processes are also industrially practiced in lowering emissions in other applications such as metal pickling processes, fluidized catalytic cracker (FCC) regenerators, metal recovery furnaces and sulphuric acid manufacture.

Coal fired boilers with low nitrogen oxides burners and staged combustion often attain nitrogen oxides in 0.25 lb/MMBTU to 0.4 lb/MMBTU (MMBTU = million British Thermal Unit) cost effectively (, with 1 lb being 0.45359237 k[ilo]g[ramm] and with 1 MMBTU being 1.05505585262 G[iga]J[oule]) whereas regulations require nitrogen oxides emissions in a range of 0.1 lb/MMBTU to 0.15 lb/MMBTU, i. e. post combustion technology that can cost effectively offer forty percent to seventy percent reduction.

The methods disclosed in US 5 206 002, in US 6 162 409, in US 6 649 132 B1 and in US 7 303 735 B2 use chemistry of nitrogen oxides reaction with ozone by forming higher oxides of nitrogen, especially the pentavalent form or higher which are quite water soluble and readily removed by wet scrubbing. The stoichiometric amount of ozone required to convert one mole of NO_{X}, in the form of NO, to the pentavalent form is about 1.5 moles of ozone and 0.5 moles if NO_{X} is in the form of NO₂.

The process disclosed in EP 2 719 440 A1 is an improvement over US 5 206 002, over US 6 162 409, over US 6 649 132 B1 and over US 7 303 735 B2 by splitting the gas stream into at least two or more streams and treating at least one stream with ozone for oxidizing NO_{X} and other contaminants, capturing oxidized contaminants in a scrubber or any other capture device, and then recombining streams substantially free from oxidized contaminants with one stream that has not been treated with ozone. Splitting streams requires simple hardware, such as partitioned ductwork or capture devices, and in specific applications utilizes specialized gas handling equipment.

While the ozone based methods for removing nitrogen oxides from combustion streams are effective at achieving ultra low levels of nitrogen oxides emissions in the treated gas stream, there is need for an improved process that efficiently and economically cleans exhaust gas streams containing contaminants such as particulates, acid gases (NOₓ, SOₓ, hydrogen chloride HCl) and heavy metals for the entire spectrum of NO_{X} removal requirement without physically partitioning the gas stream in a scrubber.

Regarding the technological background of the present invention, reference is further made to EP 1 106 238 A1and to EP 1 852 172 A1.

### Disclosure of the present invention: object, solution, advantages

Starting from the disadvantages and shortcomings as described above as well as taking the prior art as discussed into account, an object of the present invention is to overcome the limitations and problems that earlier methods and apparatus have experienced.

In particular, a principal object of the present invention is to provide method and apparatus that efficiently and economically remove contaminants such as nitrogen oxides (NOₓ) from the exhaust gases generated by combustion processes in a scrubber without the need to physically partition the scrubber to form separated gas streams that can be selectively treated for removal of the contaminants.

Another object of the present invention is to provide method and apparatus for removing contaminants in the form of NOₓ and SOₓ from combustion exhaust streams using a scrubber device that achieves a selected percentage of reduction in the contaminants from the exhaust gas stream by partitioning the gas stream and treating selected ones of the partitioned gas streams with ozone without the requirement of physically partitioning the scrubber chamber.

These objects are accomplished by a method comprising the features of claim 1, by a method comprising the features of claim 9, and by an apparatus comprising the features of claim 13. Advantageous embodiments and expedient improvements of the present invention are disclosed in the respective dependent claims.

The present invention basically provides for improved methods and apparatus for at least partially removing contaminants from exhaust gases.

More particularly, in a method for removing a portion of contaminants, such as nitrogen oxides, from an exhaust gas stream of a combustion process, the exhaust gas stream is conveyed through a gas distributor at an inlet of a wet horizontal spray scrubber. A distributor separates the gas stream into a plurality of spaced apart partitioned gas streams. The gas stream is partitioned in the chamber of the scrubber without the need for any physical partitions or obstructions positioned in the chamber. A preselected number of the partitioned gas streams are mixed with ozone to oxidize the contaminants in the gas streams. The oxidized gas streams are then sprayed with an aqueous medium to capture the oxidized contaminants and remove them from the treated gas streams. The treated gas streams are then recombined with the untreated gas streams. Excess ozone present in the treated gas streams is consumed by oxidation of contaminants in the untreated gas streams before the combined gas stream is released to the atmosphere. The partitioned gas streams selected for mixing with ozone directly correlates to the amount of nitrogen oxides that are desired to be removed from the exhaust gas stream.

In accordance with the present invention, there is provided a method for the partial removal of contaminants from a process gas stream that includes the steps conveying a process gas stream containing contaminants to an inlet of a scrubber. The process gas stream is distributed evenly across the scrubber inlet. At the scrubber inlet is formed a flow pattern of a plurality of process gas streams partitioned from one another. Ozone is fed into contact with selected ones of the partitioned gas streams in the scrubber to oxidize contaminants in the partitioned gas streams. The oxidized contaminants are removed from the selected partitioned gas streams. The selected partitioned gas streams substantially free of contaminants are recombined with the remaining partitioned gas streams containing contaminants.

According to an advantageous embodiment of the present invention, the method may include
- conveying a stream of untreated process gas through the scrubber inlet into a horizontally positioned scrubbing zone of the scrubber, and
- dividing the gas stream at the scrubber inlet free of any physical obstruction in the scrubber extending the length of the scrubber from the inlet to the outlet into a plurality of gas streams separated from one another.

Independently thereof or in combination therewith, the method may include conveying the process gas stream to the inlet of a horizontal wet spray scrubber.

Independently thereof or in combination therewith, the method may include distributing the process gas stream entering the scrubber inlet evenly throughout the width of the scrubber inlet.

Independently thereof or in combination therewith, the method may include partitioning the process gas stream entering the scrubber at the inlet into a plurality of separated rows of process gas streams extending from the inlet to the outlet of the scrubber.

Independently thereof or in combination therewith, the method may include
- positioning rows of scrubbing nozzles in spaced relation extending from the scrubber inlet to the scrubber outlet across the width of the scrubber, and
- partitioning the process gas stream into a flow pattern forming a plurality of spaced apart rows of gas streams aligned with the rows of scrubbing nozzles;
in particular, the method may include
- positioning the rows of scrubbing nozzles in parallel spaced relation across the width of the scrubber and extending the length of the scrubber from the inlet to the outlet, and
- partitioning the flow of process gas through the scrubber in a flow pattern of partitioned gas streams aligned with the parallel rows of scrubbing nozzles.

Independently thereof or in combination therewith, the method may include treating a preselected percentage of the process gas stream entering the scrubber by feeding ozone into contact with selected ones of the partitioned gas streams to oxidize contaminants in the partitioned gas streams.

Independently thereof or in combination therewith, the method may include positioning nozzles for supplying ozone to the scrubber oppositely of the selected partitioned gas streams for oxidation of a preselected percentage of the contaminants in the process gas stream.

Independently thereof or in combination therewith, the method may include spraying the treated process gas stream with an aqueous medium emitted from rows of scrubbing nozzles aligned with selected rows of partitioned gas streams containing oxidized contaminants.

Independently thereof or in combination therewith, the method may include capturing the oxidized contaminants removed from the selected partitioned gas streams in a capture device selected from the group consisting of a fabric filter, wet and dry electrostatic precipitators, a wet scrubber, a dry scrubber, a bag house, condensing surfaces, and a mist separator.

Further in accordance with the present invention there is provided a method for the partial removal of contaminants from a process gas stream that includes the steps of conditioning the process gas stream emitted from a combustion process. The process gas stream is separated into a plurality of spaced apart, partitioned gas streams containing contaminants. Ozone is injected into one or more of the partitioned gas streams to mix ozone with the contaminants in a preselected percentage of the entire process gas stream. The contaminants in the selected partitioned gas stream are oxidized by mixing with ozone. The oxidized contaminants are captured in a separation device to remove the contaminants from the selected partitioned gas stream. The selected partitioned gas stream substantially free of contaminants is reunited with the remaining partitioned gas streams containing contaminants.

According to an expedient embodiment of the present invention, the method may include
- conveying the conditioned process gas stream to an inlet of a scrubber,
- distributing the process gas stream at the inlet into a flow pattern forming the plurality of partitioned gas streams, and
- feeding ozone into contact with selected ones of the partitioned gas streams to oxidize the contaminants therein.

Independently thereof or in combination therewith, the method may include dividing the conditioned process gas stream at the scrubber inlet free of any physical obstruction in the scrubber extending the length of the scrubber from the inlet to an outlet into the partitioned gas streams.

Independently thereof or in combination therewith, the method may include
- distributing the process gas stream entering an inlet of a scrubber evenly throughout the width of the scrubber into the plurality of partitioned gas streams containing contaminants, and
- maintaining a flow pattern of partitioned gas streams from the inlet through a chamber of the scrubber to an outlet thereof.

Independently thereof or in combination therewith, the method may include mixing a preselected percentage of the partitioned gas stream with ozone corresponding to the selected percentage of nitrogen oxides (NOₓ) to be removed from the gas stream.

Independently thereof or in combination therewith, the method may include removing the oxidized contaminants from the partitioned gas stream by contacting the oxidized contaminants with an aqueous scrubbing medium.

In addition with the present invention there is provided apparatus for the partial removal of contaminants from a process gas stream that includes a scrubber having an inlet and an outlet with a chamber positioned therebetween. The chamber is free of any obstruction diverting the flow of the process gas stream from the inlet through the chamber to the outlet. A gas distributer is positioned at the inlet for receiving and evenly distributing the process gas stream across the inlet entering the chamber into a flow pattern of separated gas streams extending from the inlet to the outlet. A source of ozone is positioned at the inlet for injecting ozone into selected ones of the separated gas streams to oxidize a preselected percentage of the gas stream flowing through the chamber. A capture device positioned in the chamber receives the oxidized gas streams before exiting through the outlet to remove the oxidized contaminants from the gas streams. The outlet receives the gas stream free of contaminants for mixing with the gas stream containing contaminants.

According to a preferred embodiment of the present invention, in the apparatus said separated gas streams may be divided by said gas distributor into a plurality of partitioned gas streams spaced apart in substantially parallel relation extending from said inlet through said chamber to said outlet.

Independently thereof or in combination therewith, the apparatus may include a preselected number of nozzles positioned downstream of said gas distributor in said chamber and positioned oppositely of selected ones of said separated gas streams for injecting ozone into said selected gas streams to oxidize a preselected percentage of the contaminants present in the process gas stream entering said scrubber.

The present invention provides for the oxidation of nitrogen oxides and other contaminants by the addition of ozone to a separated portion of the process gas stream. The total process gas or flue gas stream is divided into at least two or more streams. The portion of the total process gas stream that is to be treated with ozone is determined based on the extent of nitrogen oxides removal desired.

For purposes of illustration, to remove sixty percent of the nitrogen oxides from the process gas stream, approximately sixty percent of the gas stream may be mixed with ozone and treated by the methods of the present invention.

Nitrogen oxides generated in combustion processes are mostly in the form of NO which has negligible solubility in water. By adding or admixing ozone to the exhaust gas stream, nitrogen oxides can be oxidized to higher forms. Solubility of nitrogen oxides increases with the degree of oxidation.

Higher oxides such as N₂O₅ and oxyacids are not only very soluble but also highly reactive and they can be removed in dry, semi-dry and wet scrubbing equipment along with other contaminants present in the exhaust gas stream so treated.

Although various methods as disclosed by the prior art are effective in achieving ultra low levels of nitrogen oxides emissions, when applied to removing only a portion of the nitrogen oxides present in the exhaust gas stream, they will generate appreciable amounts of NO₂ which is not quantitatively removed in the capture device employed. It is well understood that only when nitrogen oxides are oxidized beyond NO₂ to higher oxides such as N₂O₅, quantitative removal occurs in industrially used capture devices.

Nitrogen oxides oxidation to N₂O₅ involves many reactions but for the sake of brevity, it can be simplified as follows:

NO + O₃ → NO₂ + O₂ (very fast) (1)

NO₂ + O₃ → NO₃ + O₂ (slow) (2)

NO₂ + NO₃ ←→ N₂O₅ (3)

The reaction (1) is an order of magnitude faster when compared to reaction (2). By the time reaction (2) starts to occur, most of the NO is oxidized to form NO₂. Therefore, reactions (1) and (2) are somewhat consecutive reactions.

Nitrogen dioxide (NO₂) has relatively low solubility in water, so unless the reaction is brought forward to the formation of oxides higher than NO₂, removal of nitrogen oxides in a wet scrubber remains very limited. On the other hand, N₂O₅ is extremely soluble and with moisture present in the gas stream. As a result, N₂O₅ forms HNO₃ which is soluble with water in all proportions.

Therefore, any capture device, wet scrubber, wet ESP or any device with wet surfaces such as a condenser or coalescing device such as a mist eliminator will remove HNO₃ and N₂O₅ quantitatively with or without any reagent present in the aqueous phase.

The highly oxidized forms HNO₃ and N₂O₅ are also very reactive and are removed using most common reagents and adsorbents industrially used in dry and semi-dry scrubbing. N₂O₅ and HNO₃ are also removed in fabric filter by adsorption on particulate matters in a capture device such as bag house.

The stoichiometric amount of ozone required to convert one mole of NO and NO₂ to pentavalent form namely N₂O₅ and/or HNO₃ is about 1.5 moles and 0.5 moles respectively. In the majority of combustion processes, nitrogen oxides are predominantly in the form of NO. In fact by and large, most nitrogen oxides emitted from various types of sources is in the form NO.

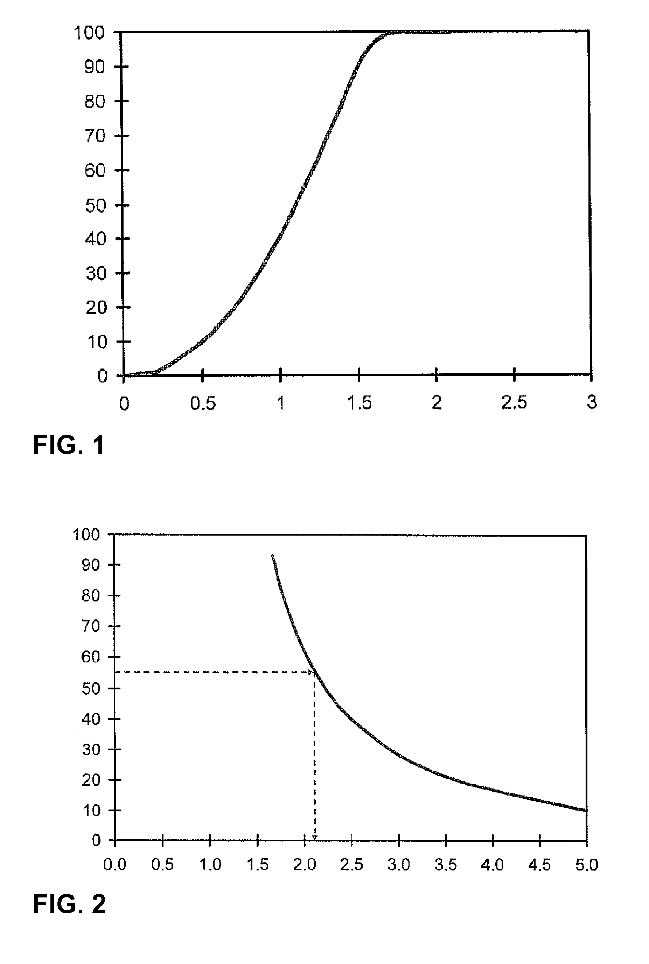

FIG. 1 depicts the removal of nitrogen oxides (NOₓ) versus the ratio of moles of ozone (O₃) to moles of nitrogen oxides (NOₓ) in the exhaust gas from a coal fired boiler. The gas flow is 950 acfm (actual cubic feet per minute) to 1000 acfm, the NO_{X} level is 250 ppm (parts per million) to 300 ppm, the sulphur oxides (SO_{X}) level is 750 ppm to 800 ppm, and the temperature is 240°F to 250°F (115.6 C to 121.1°C).

This FIG. 1 which appears in US 6 162 409 shows the overall stoichiometric ratio of 1.5 moles of ozone required per mole of nitrogen oxides for greater than ninety percent nitrogen oxides removal. This ozone requirement is per mole of nitrogen oxides present in the gas stream and not per mole of nitrogen oxides removed.

When only a partial amount of nitrogen oxides reduction is required, ozone required per mole of nitrogen oxides removed far exceeds 1.5. To remove fifty percent of nitrogen oxides (mostly as NO) a series of reactions must occur. When the ozone is added and thoroughly mixed in the gas stream, ozone first reacts with NO present in the nitrogen oxides to convert to NO₂. Only after almost all of the NO is oxidized does NO₂ oxidation to N₂O₅ begin.

To achieve fifty percent removal with two moles of nitrogen oxides present in the gas stream, one mole of nitrogen oxides need to be removed. For this fifty percent removal example, with two moles of nitrogen oxides in the form of NO, two moles of ozone are required to convert to two moles of NO₂ as per reaction (1) above. Since NO₂ is only partially soluble, in order to achieve fifty percent removal, one mole out of two moles of NO₂ must be converted to a pentavalent form.

Therefore an additional 0.5 moles of ozone is required to convert one mole of NO₂ to a pentavalent form N₂O₅. Thus the total ozone requirement is 2.5 moles per mole of nitrogen oxides removed when the nitrogen oxides targeted removal is only fifty percent.

As disclosed in US 6 162 409, the data used in FIG. 1 is plotted in FIG. 2 as nitrogen oxides (NO_{X}) removal versus ratio of moles of ozone (O₃) consumed to moles of nitrogen oxides (NO_{X}) removed in the exhaust gas from a coal fired boiler. The gas flow is 950 acfm, the NO_{X} level is 250 ppm, the SO_{X} level is 750 ppm, and the temperature is 240°F (115.6 C).

It is well illustrated that the moles of ozone required per mole of nitrogen oxides removed increases with the decrease in nitrogen oxides removal. For fifty percent nitrogen oxides removal, the molar ratio of ozone consumed to nitrogen oxides removed is closer to 2.5.

In essence, the nitrogen oxides reaction with ozone and removal by a capture device was oversimplified in this example but detailed enough to show the limitation of the prior art process. The partial removal of nitrogen oxides with these earlier processes has limitations which the present invention overcomes.

The merits of a contaminants removal process are evaluated with respect to many attributes of which there are four fundamental ones:
- level of contaminants removal, in particular of nitrogen oxides removal, the process can achieve;
- cost effectiveness, i. e. affordability of the ownership costs in both capital and operating terms per ton of contaminants removed, in particular of nitrogen oxides removed;
- existence of secondary emissions within acceptable limits;
- compatibility of nitrogen oxides removal with removal of other contaminants.

The limitations that the prior art processes fall short in measuring up to the second and third attributes. Ozone is a costly commodity, and the amount of ozone required per unit of nitrogen oxides removal increases rapidly with reduction in nitrogen oxides removal requirement.

Half a century ago, most countries in the world did not have mandatory requirement of reducing nitrogen oxides emissions. As air quality worsened due to increasing air emissions, governmental bodies put in place environmental regulations that mandated the gradual lowering of nitrogen oxides emissions.

In the initial phase of implementation of these regulations, the nitrogen oxides reduction from fixed sources such as industrial boilers, power generation systems, combustion processes as well as mobile sources such as ships, barges, etc. are modest.

The methods and processes of the prior art use significantly greater amounts of ozone per unit of nitrogen oxides removed at low or modest nitrogen oxides reduction requirements, as it is depicted in FIG. 2, and offer poor cost effectiveness thereby falling short with respect to the second attribute. The methods and processes of the prior art are directed towards very high nitrogen oxides reduction requirements.

At low or modest nitrogen oxides reduction requirements, using methods disclosed in the prior art, the ozone treated gas stream also has significantly higher nitrogen dioxide (NO₂) content. Nitrogen dioxide is brown in colour and increases the opacity of the exhaust. The large stationary sources, such as fossil fuel or biomass fired boilers or combustion sources, have huge exhaust streams and are vulnerable to default on opacity specifications by not satisfying the third attribute above.

The rate at which nitrogen oxides and ozone react is dependent on the kinetic rate constant, as well as the concentration of nitrogen oxides and ozone. With a decrease in concentration, the rate of reaction also decreases. As described earlier in the fifty percent nitrogen oxides removal case, 2.5 moles of ozone is required per mole of nitrogen oxides removed.

The reaction (1) above is very fast and consumes two moles of ozone leaving only 0.5 moles of ozone for the slower reaction (2). In order to achieve the required oxidation, either the exhaust gas stream processing vessel must be large enough to provide the necessary residence time between NO₂ and ozone or excess ozone must be added, which may result in some residual ozone in the treated flue gas that is not consumed in the scrubbing process.

Partial nitrogen oxides removal, per the prior art processes, is achieved at sub-stoichiometric ratios of ozone and oxidized stream having a mixture of N₂O₅ and NO₂. Scrubbing removes all N₂O₅ and some NO₂. On scrubbing N₂O₅ only nitrate is formed; whereas scrubbing NO₂ forms a mixture of nitrite and nitrate of alkali or alkaline earth metals. The presence of nitrite in the scrubber purge is undesired and poses challenges in handling and treating liquid streams in the effluent treatment plant.

When the flue gas also has sulfur oxides present in it, S0₂ absorption produces sulphite in the scrubbing medium. Sulphite is an ozone scavenger and helps to eliminate excess ozone in wet scrubbing devices. NO₂ also reacts with sulphite when it is present in large concentrations and depletes sulphite potentially creating conditions for ozone slip. In lime and limestone based reagents, large concentrations of NO₂ also affect sulphur oxides removal adversely thus not satisfying the fourth attribute.

In accordance with the present invention, the amount of the process gas stream to be treated for nitrogen oxides removal is about the same percentage as the amount of nitrogen oxides removal. For example, if the operator wishes to remove sixty percent of the nitrogen oxides in a flue gas stream, then the operator will treat sixty percent of the total flue gas stream with ozone.

The operator thereby separates the primary flue gas stream into two or more gas streams where at least one stream totals sixty percent of the total process gas stream by volume. An operator can conceivably treat two streams that total sixty percent of the total (thirty percent and thirty percent) or three or more streams as long as the total percentage of treated streams is approximately equal to the percentage reduction in nitrogen oxides content for the entire process gas stream.

The portion of the gas stream that is oxidized with ozone proceeds along the reactions (1) to (3), as described above. The amount of ozone is based on the amount of nitrogen oxides in that portion of gas stream. A slight excess of stoichiometric requirement may be added to reduce the reaction time requirement.

Nitrogen oxides in combustion flue gas streams are generally in the form of NO (divalent) and, therefore, stoichiometric requirement is 1.5 moles of ozone per mole of nitrogen oxides.

However, when nitrogen oxides in the gas stream is from chemical or other sources and is a mixture of divalent (NO) and tetravalent (NO₂) forms, the stoichiometric requirement is then 1.5 moles of ozone per mole of divalent form and 0.5 moles of ozone per mole of tetravalent form.

Prior to mixing ozone, all or a portion of the gas stream to be mixed may be scrubbed, pre-scrubbed, selectively pre-scrubbed, quenched or conditioned as required. With respect to temperature, the optimum condition for oxidations is 40°F to 225°F (4.4°C to 107.2°C) in the gas stream. Preferably, the gas stream may be droplet free or free from excessive mist of the aqueous medium, if sulphur oxides are also present in the flue gas stream. Ozone is not added to the balance of the gas stream.

The oxidized contaminants in the ozone treated portion of the stream are removed by contacting with a scrubbing medium in a wet or semi-dry or dry scrubber. The oxidized contaminants, especially nitrogen oxides, are highly soluble in water and very reactive and, therefore, may also be removed in the aqueous medium on condensing or coalescing surfaces, such as heat exchangers or droplet separators.

Alternatively, they may be captured in fabric filter (bag house), electrostatic precipitator (ESP), wet electrostatic precipitator (WESP), etc. Oxidized nitrogen oxides are converted to oxyacids, such as nitric acid and nitrous acid and salt.

The chemistry of this dissolution and stabilization of nitrogen oxides in the form of oxyacids and salts is described below.

N₂O₅ + H₂O → 2 HNO₃ (4)

2 HNO₃ + Ca(OH)₂ → Ca(NO₃)₂ + H₂O (5)

HNO₃ + NaOH → NaNO₃ + H₂O (6)

For treating a portion of the process gas stream with ozone, the existing scrubber and air pollution control (APC) device may be modified simply by portioning the duct and/or scrubber while ensuring the oxidized portion of stream is contacted adequately with a scrubbing medium and contaminants are captured prior to unifying the portion of the stream with the balance of gas stream not treated with ozone.

When the ozone treated portion of the gas stream is reunited with the rest of the gas stream that is untreated, small amounts of excess ozone from the treated stream are instantaneously consumed in the recombined stream. An extremely fast oxidation reaction results, as stated in equation (1) above.

Thus, the reunited stream ceases to have any residual ozone. Also, due to excess ozone present in the treated stream, almost all of the nitrogen oxides are oxidized to their pentavalent form and captured quantitatively in the capture device with insignificant amounts of leftover NO₂.

The present invention also provides the capability of an ozone free stack when high nitrogen oxides removal is desired. For example, for ninety percent nitrogen oxides removal, ten percent of the untreated stream is mixed with ninety percent treated stream and residual ozone from the ninety percent treated stream is destroyed by the untreated nitrogen oxides present in the ten percent gas stream.

The present invention thus provides a method and apparatus for the removal of contaminants such as nitrogen oxides in a relatively safe manner that does not cause secondary emissions and requires less ozone. Further, the present invention allows for the implementation of nitrogen oxides reduction in phases to match regulations that mandate a drop in nitrogen oxides emissions over time.

Phase 1 might mandate a thirty percent to 35 percent nitrogen oxides reduction, while phase 2 mandates sixty percent to 65 percent reduction, and phase 3 requiring a ninety percent to 95 percent reduction. With the methods of the present invention, these mandated reductions are reached in a cost effective manner.

The present invention lowers NO₂ emissions in the treated gas stream being exhausted to the atmosphere and the opacity of the plume irrespective of nitrogen oxides reduction required.

In this manner residual ozone in the treated gas stream is eliminated and consequently ozone slip is inhibited. Ozone usage is optimized when partial nitrogen oxides reduction is performed.

The present invention significantly lowers residence time requirement for effective nitrogen oxides oxidation without compromising efficiency and without causing ozone slip. Improved scrubber chemistry results, and consequently sulfur oxides removal efficiency is retained by inhibiting sulfite destruction in the scrubbing medium by NO₂. Thus, the methods of the present invention provide cost effective treatment when a gradual or stage wise implementation of nitrogen oxides abatement is performed.

### Brief description of the drawing

For a more complete understanding of the present inventive embodiment disclosures and as already discussed above, there are several options to embody as well as to improve the teaching of the present invention in an advantageous manner. To this aim, reference may be made to the claims dependent on claim 1, on claim 9 and on claim 13; further improvements, features and advantages of the present invention are explained below in more detail with reference to the following description of preferred embodiments by way of non-limiting example and to the appended drawing figures taken in conjunction with the description of the embodiments, of which:
- FIG. 1: is a graph showing the percentage of nitrogen oxides (NO_{X}) removal versus molar ratio of ozone (O₃) to nitrogen oxides (NOx);
- FIG. 2: is a graph showing the percentage of nitrogen oxides (NO_{X}) removal versus molar ratio of ozone (O₃) to nitrogen oxides (NO_{X}) removed;
- FIG. 3: is a graph showing the percentage of nitrogen oxides (NO_{X}) removal versus molar ratio of ozone (O₃) to nitrogen oxides (NO_{X}) removed;
- FIG. 4: is a schematic system flow diagram showing oxidation of nitrogen oxides in a non-partitioned spray scrubber according to the present invention, the spray scrubber working according to the method of the present invention;
- FIG. 5: is a schematic system flow diagram showing oxidation of nitrogen oxides in a partitioned duct according to the present invention, the duct working according to the method of the present invention;
- FIG. 6: is a schematic system flow diagram showing removal of nitrogen oxides in a multi-Venturi wet scrubbing apparatus according to the present invention, the apparatus working according to the method of the present invention; and
- FIG. 7: is a schematic system flow diagram showing removal of nitrogen oxides in a dry scrubbing capture device according to the present invention, the device working according to the method of the present invention;
- FIG. 8: is a schematic system flow diagram showing removal of nitrogen oxides in a partitioned horizontal spray scrubber according to the present invention, the spray scrubber working according to the method of the present invention; and
- FIG. 9: is a schematic system flow diagram showing removal of nitrogen oxides by scrubbing a portion of a gas stream according to the present invention, the scrubbing being according to the method of the present invention.

In the appended drawing figures, like equipment is labelled with the same reference numerals throughout the description of FIG. 1 to FIG. 9.

### Detailed description of the drawings; best way of embodying the present invention

Before explaining the present inventive embodiment in detail, it is to be understood that the embodiment is not limited in its application to the details of construction and arrangement of parts illustrated in the accompanying drawing, since the present invention is capable of other embodiments and of being practiced or carried out in various ways. Also, it is to be understood that the phraseology or terminology employed herein is for the purpose of description and not of limitation.

Basically, a method for removing at least a portion of contaminants such as nitrogen oxides from a process gas stream, in particular from an exhaust gas, is proposed. The process gas stream is separated into two or more process gas streams. At least one of the two or more process gas streams is treated first in a scrubber then is contacted with ozone. This stream is then fed to a second scrubber before being released. The portion of process gas stream separated directly correlates to the amount of nitrogen oxides that are desired to be removed from the stream.

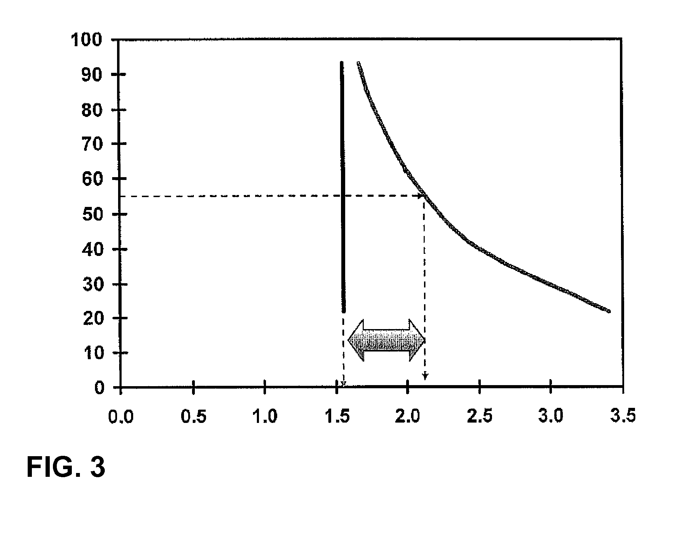

As illustrated in FIG. 3 with the suggested inventive configuration, unit ozone (O₃) consumption per mole of nitrogen oxides (NO_{X}) removed remains almost identical (= left-hand graph in FIG. 3, as per the present invention, in comparison to the right-hand graph in FIG. 3, as per the prior art). The gas flow is 950 acfm, the NO_{X} level is 250 ppm, the SO_{X} level is 750 ppm, and the temperature is 240°F (115.6 C).

As indicated by the double arrow in FIG. 3, the consumption of ozone is 35 percent less (, i. e. savings of 35 percent) in lowering 55 percent of the nitrogen oxides content compared with the prior art processes described above under identical conditions.

In addition to savings in the amount of ozone consumed, the present invention creates a dry exhaust stack, when a portion of the gas stream is not scrubbed and was thereby not saturated with water vapor. This eliminates any residual ozone and contains very low NO₂ content in the remaining nitrogen oxides. Since most of the nitrogen oxides absorbed is N₂O₅, only nitrate is formed in the scrubbing medium.

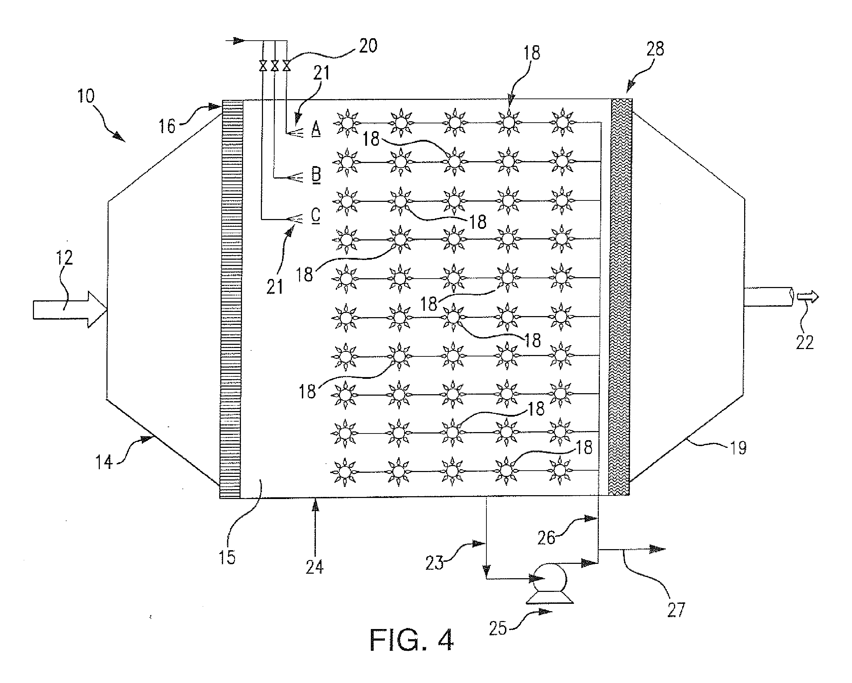

Referring to FIG. 4 there is schematically illustrated a wet horizontal spray scrubber 10 for receiving a process gas stream 12 from, for example, a coal fired boiler for the removal of NOₓ and SOₓ contaminants. In accordance with environmental regulations, the NOₓ emissions must be limited to below 0.15 lb of NOₓ per million British Thermal Unit (MMBTU) of heat input.

With the use of available lower cost combustion modification technologies, such as Low NOₓ Burners (LNB), combustion staging, over fire air (OFA), NOₓ levels in the flue gas can be lowered to approximately 0.22 lb to 0.45 lb of NOₓ per MMBTU. Although the cost of ozone generation equipment and power requirements are substantial, the present invention facilitates incremental NOₓ reduction to 0.15 lb/MMBTU in a cost effective manner to meet the regulatory requirements.

As illustrated in FIG. 4, the untreated process gas stream 12 is conveyed through an inlet section 14 of the scrubber 10 into scrubber chamber 15. If required, the process gas stream containing contaminants may be conditioned prior to introduction into the scrubber 10. Preliminary to introduction into the scrubber 10 the process gas stream may be cooled, quenched, prescrubbed or selectively scrubbed of contaminants, such as SOₓ, HCl, Cl₂, HF, and H₂S.

The scrubber inlet section 14 includes a gas distributer 16 that extends the full width of the inlet section 14. The gas distributer 16 functions to evenly distribute the gas stream 12 into discrete partitioned gas streams that are separated from one another at the inlet to the scrubber 10.

The gas streams are thus divided or partitioned from one another evenly the entire width of the inlet section 14. The scrubber chamber 15 is free of any physical obstruction to partition the chamber. Physical partitions are not required to be installed in the scrubber chamber 15 to achieve partitioning of the process gas stream.

Partitioning of the gas stream forms a plurality of scrubbing zones within the scrubber chamber 15. With a horizontal spray scrubber as shown in FIG. 4, the gas flows the length of the scrubber 10 in only one direction, which is typical for horizontal scrubbers. The flow of gas in each partitioned gas zone is fixed in length based on the required removal efficiency of the contaminants. Also, the width of the scrubber 10 varies based on the gas handling capacity required for the scrubber.

In the embodiment of the horizontal scrubber 10 shown in FIG. 4, ten rows of scrubbing nozzles 18 are positioned in a parallel array, each equally spaced apart the width of a scrubber 10. Any number of rows of scrubbing nozzles 18 can be utilized in the scrubber, as determined by the size of the scrubber 10 and the operating range of the gas flow.

The number of rows of the scrubbing nozzles 18 is also determined by dispersion studies based on mathematical modeling and residence time analysis. In this manner, a flow pattern of discrete, partitioned gas streams is formed across the width of the scrubber 10 to flow the length of the scrubber 10 from the inlet section 14 to an outlet section 19.

As discussed above, the process gas stream may be pre-conditioned before it enters the inlet section 14 and is partitioned into discrete gas streams. The partitioning of the process gas stream entering the separator 10 is accomplished without the need for physical barriers or structure in the chamber 15 to divide the gas stream into a partitioned flow pattern. The partitioning of the gas stream is accomplished by the gas distributor 16.

Consequently, the pattern of gas flow through the chamber 15 of the scrubber 10 is in a plug flow-type manner.

The design of the partitioned gas flow is accomplished by plotting velocity and concentration profiles using Computational Fluid Dynamics (CFD) software for the given geometry of the scrubber 10 and the velocity of the process gas stream entering the scrubber 10.

As illustrated in FIG. 4, ozone from a source is introduced into the scrubber 10 by an injection system 20 including ducts connected to nozzles 21. Any number of nozzles 21 can be positioned downstream of the gas distributer 16. Each nozzle 21 is positioned oppositely of a partitioned process gas stream.

As shown in FIG. 4, three nozzles 21 are positioned to inject ozone into three of the ten partition gas streams, identified as zones A, B, and C. Ozone is injected from nozzle 21 into each zone. The zones are separately treated. Consequently, thirty percent of the process gas stream entering the scrubber 10 is treated.

The number of partitioned process gas streams that are injected with ozone from nozzles is selective. For example, any combination of the partitioned gas streams may be selected for the injection of ozone from nozzles positioned oppositely of the rows of scrubber nozzles 18.

The exact number of nozzles and the quantity of ozone injected into the partitioned process gas stream is determined by the NOₓ content and the removal thereof that is required. With this arrangement a selected portion of the process gas stream is treated without constructing within the scrubber chamber 15 physical partitions or barriers. The process gas stream is partitioned off by the gas distributor 16.

Then a number of the partitioned gas streams is selected for removal of contaminants. For a gas stream with 0.2 lb/MMBTU to 0.25 lb/MMBTU (MMBTU = million British Thermal Units) NOₓ content requiring NOₓ reduction to 0.15 lb/MMBTU in outlet stream 22 from the outlet section 19, approximately thirty percent of the gas entering the scrubber 10 is admixed with ozone.

As discussed above, the gas distributer 16 is operable to partition the untreated process gas stream entering the scrubber inlet section 14 into a plurality of discrete, separated gas streams to create a plurality of partitioned gas streams that extend in parallel spaced relation the width of the scrubber 10 from the inlet section 14 to the outlet section 19.

Each partitioned gas stream forms a zone, and selected zones are oxidized by injecting ozone from the injection system 20 into the scrubber 10. With the embodiment shown in FIG. 4, injection zones A, B, and C are formed and the injection system 20 delivers ozone to the injection nozzles 21 for each zone.

The injection nozzles 21 inject ozone into the zones A, B, and C for mixing with the partitioned gas streams therein forming oxidation zones A, B, and C. Contaminants, such as NOₓ, Hg, and others, are quickly oxidized in zones A, B, and C prior to reaching the array of scrubbing nozzles 18. The oxidized contaminants, such as N₂O₅, and HNO₃ are readily captured in the aqueous sprays, along with SOₓ, HCl, and other contaminants from the nozzles 18.

If the scrubber volume upstream of the oxidation zones A, B, and C is inadequate, the residence time required to obtain substantially complete removal of NOₓ from the processed gas stream can be compensated by increasing the volume of ozone that is injected into the partitioned gas streams.

The scrubbing nozzles 18 are supplied with an aqueous medium 23 from a sump 24 via pump 25 through a header spray assembly 26 to the array of scrubber nozzles 18 in each of the partitioned process gas streams. The aqueous medium is preferably made up of water, reagents such as lime, limestone, soda ash, caustic alkali, alkaline earth metal, ammonia hydroxides, carbonates, bicarbonates, and mixtures thereof.

The scrubbing medium from the sump 24 maybe continuously or intermittently purged by stream 27 to maintain dissolved and suspended solids within the operating range. Nitrogen oxides scrubbing is slightly affected by pH in the range of 2 to 14 or by the presence of dissolved or suspended solids content. Other known parametric controls, such as pH control and purge controls, can also be utilized.

In a typical limestone based wet Flue Gas Desulphurization (FGD), a scrubber sump is fitted with an air sparger to oxidize calcium sulfite to sulfate.

The oxidized gas streams in oxidation zones A, B, and C and the untreated gas streams from the other partitioned zones flow through a mist removal/droplet separation device 28 where fine droplets of mist from the processed gas stream are removed.

The partitioned gas streams pass through the mist separation device 28 into the scrubber outlet section 19 where the partitioned gas streams are reunited. The treated gas stream 22 exits the scrubber outlet 19 to the atmosphere. Any residual ozone present in the treated gas stream 22 is immediately consumed by NOₓ remaining in the treated gas stream 22.

Treating a processed gas stream by the partitioning of the process stream using the above-described spray scrubber consumes 35 percent less ozone in lowering the NOₓ content from between 0.2 lb/MMBTU and 0.25 lb/MMBTU to 0.15 lb/MMBTU compared to what is known with the prior art devices under identical conditions and is achieved by the virtual partitioning of the gas stream in the scrubber without requiring the construction of physical partitions or barriers as disclosed in EP 2 719 440 A1.

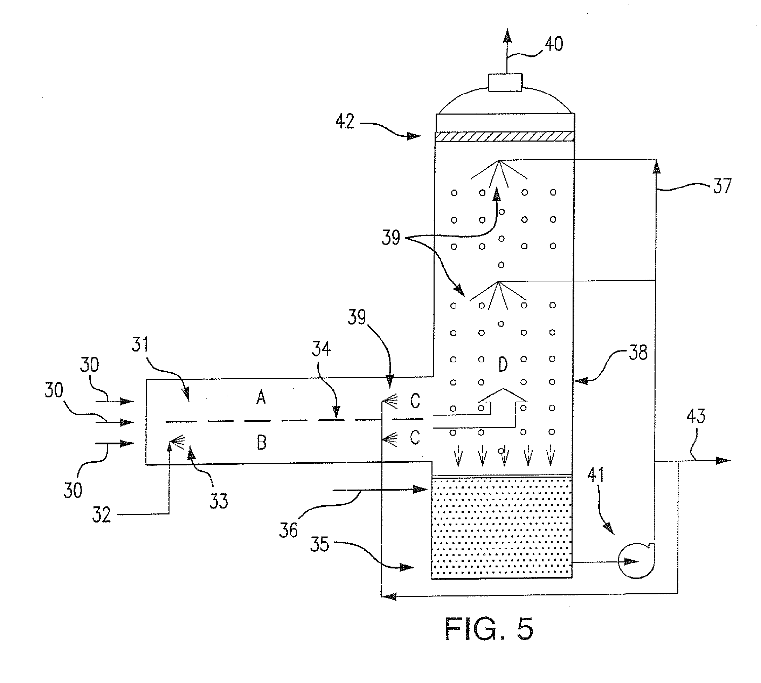

Referring now to FIG. 5, there is schematically illustrated a vertical flue gas scrubber for the oxidation of nitrogen oxides in a partitioned duct. An untreated gas stream 30 is conveyed through duct 31 to a wet spray scrubber 38. With this embodiment of the present invention, the duct 31 is physically partitioned to treat a portion of the gas stream 30. The partition 34 divides the duct 31 into two equal zones, A and B.

Ozone from duct 32 is emitted from nozzle 33 for mixing with the gas stream in zone B. Contaminants, including nitrogen oxides, are completely oxidized in the zone B prior to contact with aqueous medium sprays from nozzles 39 connected to header spray assembly 37 in zone C. Oxidized contaminants from zone B, such as N₂O₅ and HNO₃, are readily captured in aqueous sprays in zone C.

The gas stream exiting from both zones C is remixed in the bottom section of the scrubber 38. If required, the residence time requirement can be compensated for by using a slight excess of ozone. If the volume of the duct (zones A and B) is insufficient or if the duct cannot be partitioned, then the bottom portion of the scrubber 38 may be partitioned to create zones A and B for oxidation.

If sulfur oxides are also present, the internal arrangements in the scrubber may be made necessary to avoid droplets from the spray section falling into the oxidation zone. If the physical partitioning of the bottom of the scrubber 38 is not an option, then ozone can be introduced in the section of the bottom if the oxidized portion of the gas stream rises to the scrubbing section vertically without mixing with remaining gas stream.

In this manner a selective portion of gas stream is treated without physically partitioning gas flow. With the help of modern flow modeling tools, such as computational fluid dynamics (CFD), it is now possible to ensure that a substantial part of ozone mixed portion remains isolated until oxidized NOₓ is captured in the scrubbing section. The present invention can also be practiced without physically separating the gas stream for treating with ozone as discussed above and disclosed in FIG. 4.

As further illustrated in FIG. 5, the scrubber 38 is sprayed with an aqueous medium 36 from a sump 35 via pump 41 through the header spray assembly 37 and spray nozzles 39. Scrubbing medium sprayed in the gas stream removes remaining contaminants such as SO₂, HCl, etc.

The sump 35 is supplied with an aqueous medium 36 made up of water, reagents, etc. Part of the scrubbing medium may be continuously or intermittently purged by stream 43 to maintain dissolved and suspended solids within the operating range.

Nitrogen oxides scrubbing is insignificantly affected by pH in the range of 2 to 14 or the presence of dissolved or suspended solids content and, therefore, other parametric controls, such as pH control and purge control, are not described in detail herein.

The scrubbed gas stream in the scrubber column 38 then flows through the mist removal/droplet separation device 42 and exits to the atmosphere treated gas as stream 40 from the outlet of scrubber 38.

In a typical limestone based wet flue gas desulfurization (FGD), scrubber sump 35 is fitted with an air sparger, not shown, to oxidize calcium sulfite to sulfate.

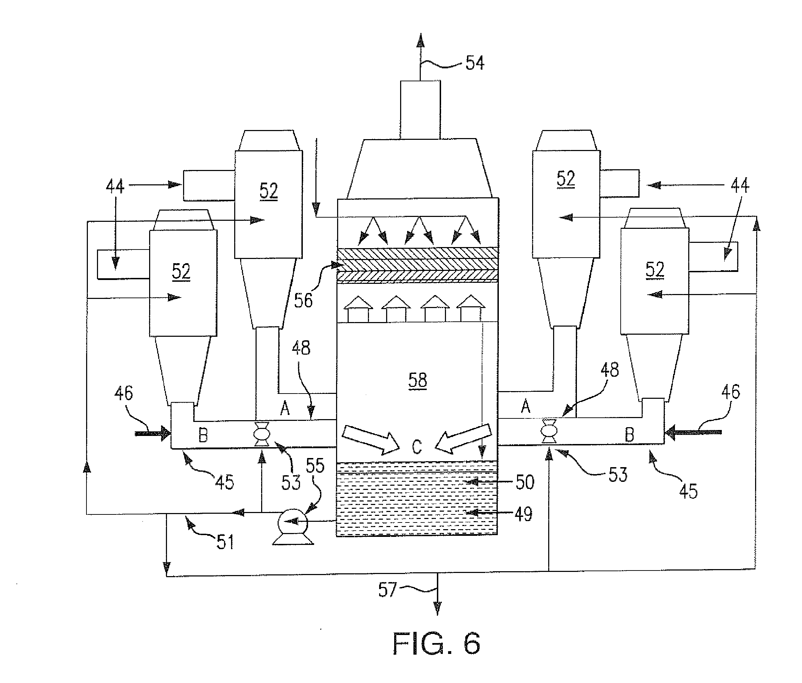

Now referring to FIG. 6, there is schematically illustrated a multi-Venturi wet scrubbing apparatus. Flue gas from a fluid catalytic cracking (FCC) regenerator off gas stream 44 is treated for up to fifty percent nitrogen oxides removal in the illustrated example. The scrubbing apparatus consists of four Venturis for gas-liquid contacting.

The FCC regenerator off gas stream 44 is scrubbed in four Venturi scrubbers, each designated by the numeral 52, prior to admixing with ozone. The FCC regenerator off gas stream is conveyed to the four Venturi scrubbers 52. Each fluid gas stream 44 is brought into contact with a scrubbing medium in the Venturis to remove acid gas including sulfur oxides, HCl, etc. and particulate matter, such as coke and catalyst fines present in the FCC regenerator off gas.

Output ducts from pairs of Venturi scrubbers 52 are united to form an elbow duct. Ozone is introduced and mixed by an injection system 46 into each elbow duct. A partition 48 divides each elbow duct into zones A and B. The injection system 46 delivers ozone into duct 45 forming zone B of each elbow duct to treat fifty percent of the flue gas stream conveyed from each pair of the Venturi scrubbers 52.

Ozone from injection system 46 is mixed with the portion of gas stream in the duct 45 forming an oxidation zone, designated zone B which has a larger volume than zone A. Contaminants including nitrogen oxides are completely oxidized in zone B prior to reaching aqueous medium sprays 53 at the end of the elbow duct. Both elbow ducts open into zone C of a disengagement drum 58.

Oxidized contaminants such as N₂O₅ and HNO₃ are readily captured in aqueous sprays 53. The gas streams exiting from the elbow ducts are allowed to mix in zone C in the bottom section of the drum 58. If the residence time available in the elbow ducts is insufficient, the bottom portion of the drum 58 may also be partitioned to continue oxidation in the drum to allow nitrogen oxides absorbed in the coalescing droplets discharged from a mist eliminator 56.

The Venturi scrubbers 52 are supplied with an aqueous medium from the sump 49 via pump 55 through a header 51. The same medium is also routed to spray nozzles 53. Scrubbing medium sprayed into the gas stream also removes any remaining contaminants such as SO₂.

The sump 49 is supplied with an aqueous medium 50 made up of water, reagents, etc. Some medium may be continuously or intermittently purged by stream 57 to maintain dissolved and suspended solids within operating range.

Nitrogen oxides scrubbing is insignificantly affected by pH in the range of 2 to 14 or the presence of dissolved or suspended solids content and, therefore, other parametric controls, such as pH control and purge control, are not described in detail herein.

The gas stream from the disengagement drum 58 flows through the tray and mist eliminator assembly 56 and exhausted to the atmosphere as treated gas stream 54.

In accordance with the present invention, nitrogen oxides emissions are lowered from 35 parts to 45 parts per million to less than twenty parts per million by treating fifty percent of the gas stream.

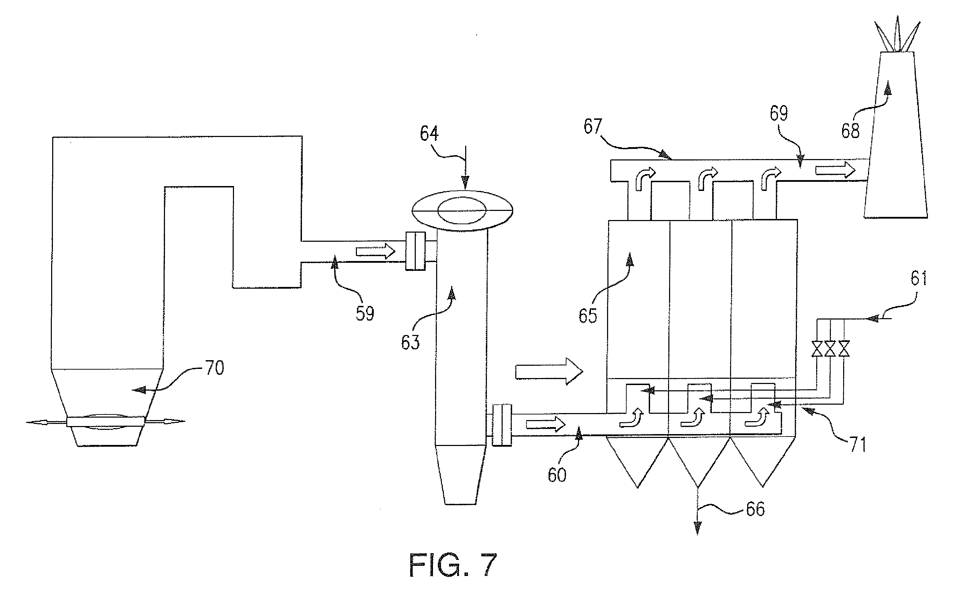

In the embodiment of the present invention shown in FIG. 7, a flue gas stream 59 emitted from a combustion device 70 is scrubbed in spray dryer scrubber 63 with alkali or alkaline hydroxide, carbonate or bicarbonates or mixtures thereof in a reagent spray 64 for the removal of contaminants except nitrogen oxides. Environmental regulations mandate lowering the nitrogen oxides by sixty percent to 65 percent in two steps.

In the spray dryer scrubber 63, the hot gas stream 59 is contacted with the aqueous reagent stream 64 to remove sulfur oxides, HCl, mercury and other contaminants. The aqueous reagent stream due to heat forms finely dusted solids in the gas stream. These solids are carried with the exiting gas stream via duct 60 to a bag house 65 containing bags made of fabric filter. The bag house 65 is generally modular with multiple chambers.

FIG. 7 illustrates three chambers for bag house 65. An ozone containing gas stream 61 is conveyed through a manifold 71 for mixing with a flue gas stream entering any one or all of the three chambers of bag house 65 depending on nitrogen oxides content and removal required.

Assuming the flow of the flue gas stream is distributed equally, adding a slight excess of ozone in one chamber provides around 33 percent nitrogen oxides removal while adding ozone in any two out of the three chambers provides 66 percent nitrogen oxides removal. Oxidized nitrogen oxides are then adsorbed on solid reagent in the bag house 65.

Solids are retained inside the bags while the gas streams flow through the fabric filter medium. Solids retained and collected on the surface of bags eventually fall by pulsating flow and are collected in the bottom section of the bag house. Solids are periodically or continuously discharged as stream 66 for disposal.

All gas streams from the various chambers are reunited in the exhaust duct 67 forming a treated gas stream 69. On mixing the gas streams exiting various chambers in the duct, any residual ozone present is immediately consumed by the remaining nitrogen oxides in the treated gas stream 69 which is then vented to the atmosphere through stack 68.

Initially in the first stage, in order to meet the thirty percent emissions reduction, ozone is introduced only into one chamber of the bag house 65. At a later time, to meet the sixty percent to 65 percent reduction, gas streams in any two out of three chambers may be treated with a slight stoichiometric excess of ozone.

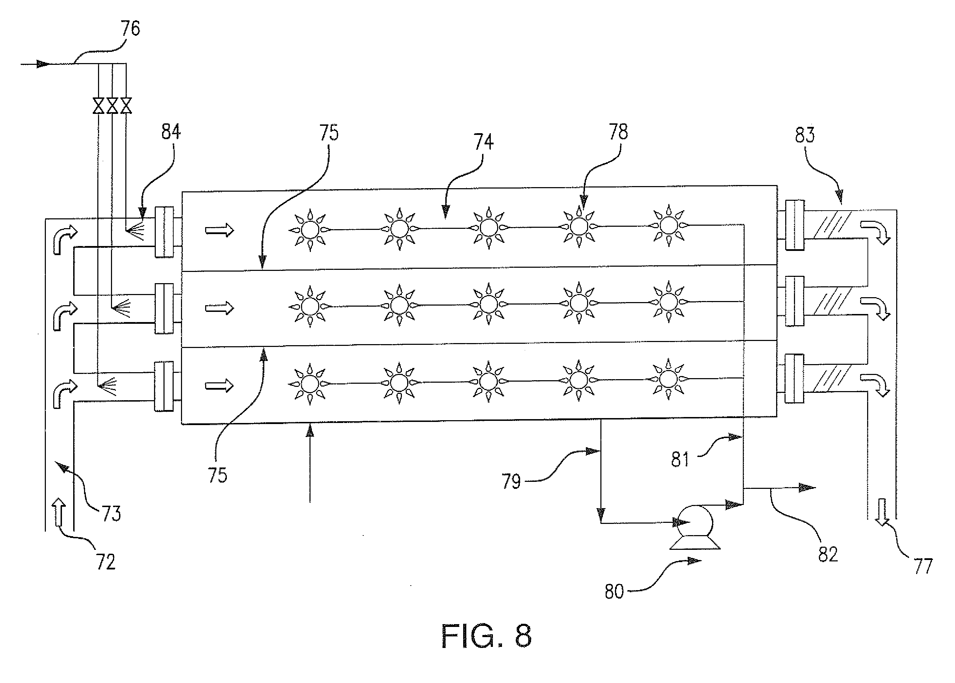

Now referring to FIG. 8, there is schematically illustrated a partitioned horizontal spray scrubber. An untreated gas stream 72 is conveyed through duct manifold 73 to a horizontal wet spray scrubber 74. Two partitions 75 extending horizontally in the scrubber 74 divide the scrubber 74 into three equal chambers.

The duct manifold 73 divides the gas stream 72 almost equally to three chambers. An ozone containing gas stream 76 is conveyed into manifold 73 via nozzles 84 for mixing with flue gas stream entering any one, two or all three chambers depending on NOₓ content and removal required.

For flue gas with an NOₓ content from 0.4 lb to 0.45 lb per MMBTU in the stream 72 requiring NOₓ reduction to 0.15 lb per MMBTU outlet in stream 77, gas entering two of the three chambers of scrubber 74 is admixed with ozone.

Ozone quickly oxidizes contaminants such as NOₓ, Hg etc in the duct entering the scrubber prior to reaching array of nozzles 78 that deliver an aqueous medium spray. Oxidized contaminants such as N₂O₅ and HNO₃ are readily captured in aqueous sprays along with SOₓ, HCl and other contaminants.

If the scrubber volume upstream of the spray zone (spray array 78) is inadequate, the residence time requirement for almost complete removal of NOₓ can be compensated by using slight excess of ozone.

Scrubber 74 is sprayed with an aqueous medium 79 from a sump via pump 80 through header spray assembly 81 and the array of spray nozzles 78. The sump is supplied by an aqueous stream make up of water, reagents such as lime, limestone, soda ash, caustic, alkali, alkaline earth metal, ammonia hydroxides, carbonates, bicarbonates and mixtures thereof. Part of the scrubbing medium may be continuously or intermittently purged by stream 82 to maintain dissolved and suspended solids within the operating range.

NOₓ scrubbing is very slightly affected by pH in the range of 2 to 14 or presence of dissolved or suspended solids content and, therefore, other parametric controls such as pH control and purge controls are not described in detail herein. In a typical limestone based wet FGD (Flue Gas Desulfurization), scrubber sump may also be fitted with air sparger to oxidize of calcium sulfite to sulfate which is not shown in FIG. 8.

The fine droplets and mist from flue gas leaving each of three chambers are removed in a mist removal device 83, and gas streams are reunited in the duct forming treated gas stream 77. Any residual ozone present in the various chambers is immediately consumed by remaining NOₓ in the treated gas stream 77.

With the present invention, consumption of ozone is 25 percent less in lowering NOₓ content from 0.45 lb/MMBTU to 0.15 lb/MMBTU compared to what is reported in US 5 206 002, in US 6 162 409, in US 6 649 132 B1 and in US 7 303 735 B2 under identical conditions.

In an another example, NOₓ emission from a bio mass fired boiler is required to be lowered in a first stage from 0.7 lb/MMBTU to 0.45 lb/MMBTU and finally in the second stage to less than 0.3 lb/MMBTU. Environmental regulations do not require scrubbing of any other pollutants. The proposed solution provides flexibility in stage wise reduction of NOₓ by treating required amount of gas stream with slight stoichiometric excess of ozone at each stage.

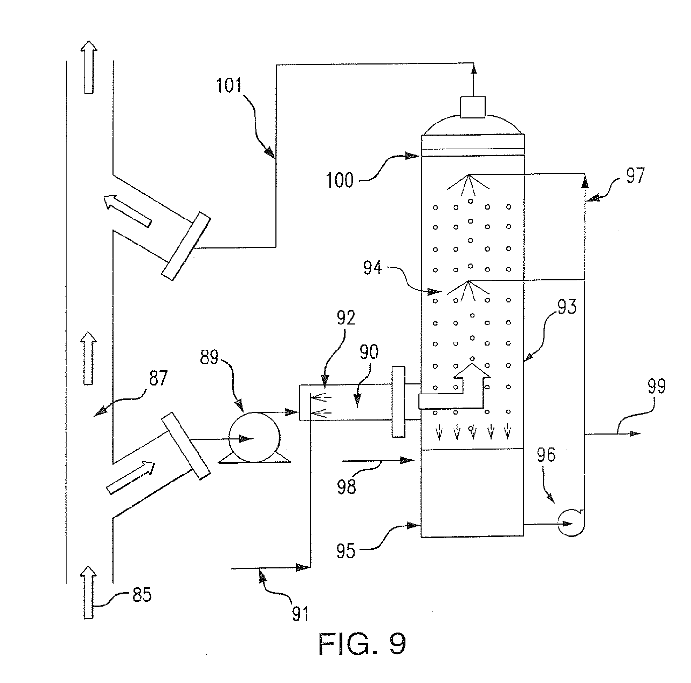

Referring to the embodiment shown in FIG. 9, there is shown schematically a device for partial scrubbing of a flue gas stream. An untreated gas stream 85 is conveyed through main gas header 87. A portion of the gas stream in header 87 is diverted by a fan 89 into a duct 90 is almost directly proportional to NOₓ removal requirements.

For fifty percent NOₓ removal, fifty percent gas stream 85 is directed by fan 89 into the duct 90. The flow of the gas is varied by a variable frequency drive control of the fan 89. Ozone supplied from a source 91 is conveyed to ozone injector nozzles 92 where ozone is mixed with the gas stream in duct 90.

The amount of ozone injected is in slight excess of stoichiometric requirement based on amount of NOₓ present in this portion of the gas stream. Stoichiometric requirement is 1.5 moles of ozone per mole of NO content and 0.5 moles of ozone per mole of NO₂ content in this portion of the flue gas stream.

The gas stream mixed with ozone is conveyed from duct 90 into a column scrubber 93. The ozone in duct 90 quickly oxidizes contaminants such as NO_{X}, Hg etc. in the flue gas stream entering the scrubber 93 prior to reaching an aqueous spray from nozzles 94 vertically spaced apart in scrubber 93. Oxidized contaminants such as N₂O₅ and HNO₃ are readily captured in the aqueous sprays from nozzles 94 along with any other contaminants, if present.

Scrubber 93 is supplied with an aqueous medium from scrubber sump 95 via recirculation 96 through a spray header assembly 97 to the array of spray nozzles 94 in scrubber 93. Sump 95 is supplied with an aqueous medium 98 made up with water, reagents such as lime limestone, soda ash, caustic, alkali, alkaline earth metal, ammonia hydroxides, carbonates, bicarbonates and mixtures thereof.

Part of the scrubbing medium 98 may be continuously or intermittently purged by a stream 99 to maintain dissolved and suspended solids within the operating range. NO_{X} scrubbing is very slightly affected by pH in the range of 2 to 14 or presence of dissolved or suspended solids content and therefore, other parametric controls such as pH control and purge controls are not described in detail herein.

Fine droplets and mist from the treated flue gas exiting the scrubber 93 after the aqueous sprays are removed by a mist removal device 100. Thereafter, the treated gas stream 101 is reunited with the untreated part of the flue gas stream 85 in the gas header 87. On mixing treated gas stream 101 with untreated gas stream 85 any residual ozone present is immediately consumed by NO_{X} in the untreated portion of gas stream 85.

While the present invention has been described with respect to particular embodiments thereof, it is apparent that numerous other forms and modifications of the present invention will be obvious to those skilled in the art. The appended claims in the present invention generally should be construed to cover all such obvious forms and modifications which are within the true spirit and scope of the present invention.

### List of reference numerals

- in the exemplary embodiment according to FIG. 4:
   - 10: scrubber, in particular spray scrubber, for example horizontal spray scrubber, such as horizontal wet spray scrubber
   - 12: untreated gas stream or untreated inlet stream, in particular flue gas stream or process gas stream, for example fluid catalytic cracking (FCC) off gas stream
   - 14: inlet, in particular inlet section, of scrubber 10
   - 15: chamber of scrubber 10
   - 16: gas distributer
   - 18: nozzle, in particular scrubbing nozzle or spray nozzle or spray array
   - 19: outlet, in particular outlet section, of scrubber 10
   - 20: injection system
   - 21: nozzle, in particular injection nozzle, for example ozone injector nozzle
   - 22: treated gas stream, in particular treated process gas stream
   - 23: aqueous medium
   - 24: sump
   - 25: pump
   - 26: spray assembly, in particular header spray assembly
   - 27: stream
   - 28: capture device or separation device, in particular mist separation device, for example mist removal / droplet separation device
- in the exemplary embodiment according to FIG. 5:
   - 30: untreated gas stream or untreated inlet stream, in particular flue gas stream or process gas stream, for example fluid catalytic cracking (FCC) off gas stream
   - 31: duct
   - 32: ozone, in particular ozone containing gas stream, for example from ozone source
   - 33: nozzle, in particular injection nozzle, for example ozone injector nozzle
   - 34: partition of duct 31
   - 35: sump
   - 36: aqueous stream for sump 35
   - 37: header spray assembly
   - 38: capture device, in particular scrubbing apparatus, for example wet spray scrubber
   - 39: aqueous spray, in particular aqueous medium spray or aqueous reagent spray, for example spray nozzle
   - 40: treated gas stream, in particular treated process gas stream
   - 41: pump
   - 42: capture device or separation device, in particular mist separation device, for example mist removal / droplet separation device
   - 43: stream
- in the exemplary embodiment according to FIG. 6:
   - 44: untreated gas stream or untreated inlet stream, in particular flue gas stream or process gas stream, for example fluid catalytic cracking (FCC) off gas stream
   - 45: duct
   - 46: ozone, in particular ozone containing gas stream, for example from ozone source
   - 48: partition
   - 49: sump
   - 50: aqueous stream for sump 49
   - 51: header
   - 52: scrubbing apparatus, in particular pre-scrubbing apparatus, for example Venturi scrubber
   - 53: aqueous spray, in particular aqueous medium spray or aqueous reagent spray, for example spray nozzle
   - 54: treated gas stream, in particular treated process gas stream
   - 55: pump
   - 56: capture device or separation device, in particular tray and mist eliminator assembly
   - 57: stream
   - 58: capture device, in particular scrubbing apparatus, for example disengagement drum
- in the exemplary embodiment according to FIG. 7:
   - 59: untreated gas stream or untreated inlet stream, in particular flue gas stream or process gas stream, for example fluid catalytic cracking (FCC) off gas stream
   - 60: duct
   - 61: ozone, in particular ozone containing gas stream, for example from ozone source
   - 63: scrubbing apparatus, in particular pre-scrubbing apparatus, for example spray dryer
   - 64: aqueous spray, in particular aqueous medium spray or aqueous reagent spray, for example spray nozzle
   - 65: capture device or separation device, in particular scrubbing apparatus, for example bag house
   - 66: stream of solids
   - 67: duct
   - 68: stack
   - 69: treated gas stream, in particular treated process gas stream
   - 70: combustion device
   - 71: manifold
- in the exemplary embodiment according to FIG. 8:
   - 72: untreated gas stream or untreated inlet stream, in particular flue gas stream or process gas stream, for example fluid catalytic cracking (FCC) off gas stream
   - 73: duct manifold
   - 74: scrubber, in particular spray scrubber, for example horizontal spray scrubber, such as horizontal wet spray scrubber
   - 75: partition
   - 76: ozone, in particular ozone containing gas stream, for example from ozone source
   - 77: treated gas stream, in particular treated process gas stream
   - 78: nozzle, in particular scrubbing nozzle or spray nozzle or spray array
   - 79: aqueous medium
   - 80: pump
   - 81: header spray assembly
   - 82: stream
   - 83: capture device or separation device, in particular mist removal device
   - 84: nozzle, in particular injection nozzle, for example ozone injector nozzle
- in the exemplary embodiment according to FIG. 9:
   - 85: untreated gas stream or untreated inlet stream, in particular flue gas stream or process gas stream, for example fluid catalytic cracking (FCC) off gas stream
   - 87: gas header, in particular main gas header
   - 89: fan
   - 90: duct
   - 91: ozone, in particular ozone containing gas stream, for example from ozone source
   - 92: nozzle, in particular injection nozzle, for example ozone injector nozzle
   - 93: scrubber, in particular column scrubber
   - 94: nozzle, in particular scrubbing nozzle or spray nozzle or spray array
   - 95: sump, in particular scrubber sump
   - 96: recirculation
   - 97: spray header assembly
   - 98: aqueous medium or scrubbing medium
   - 99: stream
   - 100: capture device or separation device, in particular mist removal device
   - 101: treated gas stream, in particular treated process gas stream

   - A: first zone of duct 31 (, 45)
   - B: second zone, in particular oxidation zone, of duct 31, 45
   - C: third zone of duct 31 (, 45)

## Claims

1. A method for the partial removal of contaminants from a process gas stream (12; 30; 44; 59; 72; 85), comprising the steps of:
- conveying the process gas stream (12; 30; 44; 59; 72; 85) to an inlet (14) of a scrubber (10; 38; 58; 65; 74; 93), in particular of a horizontal wet spray scrubber (10; 74),
- distributing the process gas stream (12; 30; 44; 59; 72; 85) evenly across the inlet (14) of the scrubber (10; 38; 58; 65; 74; 93), in particular evenly throughout the width of the inlet (14) of the scrubber (10; 38; 58; 65; 74; 93),
- forming at the the inlet (14) of the scrubber (10; 38; 58; 65; 74; 93) a flow pattern of a plurality of process gas streams partitioned from one another,
- feeding ozone (32; 46; 61; 76; 91) into contact with selected ones of the partitioned gas streams in the scrubber (10; 38; 58; 65; 74; 93) to oxidize contaminants in the partitioned gas streams, in particular for treating a preselected percentage of the process gas stream (12; 30; 44; 59; 72; 85) entering the scrubber (10; 38; 58; 65; 74; 93),
- removing the oxidized contaminants from the selected partitioned gas stream, and
- recombining the selected partitioned gas streams substantially free of contaminants with the remaining partitioned gas streams containing contaminants.

2. The method according to claim 1 which includes
- conveying a stream (12; 30; 44; 59; 72; 85) of untreated process gas through the inlet (14) of the scrubber (10; 38; 58; 65; 74; 93) into a horizontally positioned scrubbing zone of the scrubber (10; 38; 58; 65; 74; 93), and
- dividing the gas stream at the inlet (14) of the scrubber (10; 38; 58; 65; 74; 93) free of any physical obstruction in the scrubber (10; 38; 58; 65; 74; 93) extending the length of the scrubber (10; 38; 58; 65; 74; 93) from the inlet (14) to the outlet (19) into a plurality of gas streams separated from one another.

3. The method according to claim 1 or 2 which includes partitioning the process gas stream (12; 30; 44; 59; 72; 85) entering the scrubber (10; 38; 58; 65; 74; 93) at the inlet (14) into a plurality of separated rows of process gas streams extending from the inlet (14) to the outlet (19) of the scrubber (10; 38; 58; 65; 74; 93).

4. The method according to at least one of claims 1 to 3 which includes
- positioning rows of scrubbing nozzles (18; 78; 94) in spaced relation extending from the inlet (14) to the outlet (19) of the scrubber (10; 38; 58; 65; 74; 93) across the width of the scrubber (10; 38; 58; 65; 74; 93), and
- partitioning the process gas stream into a flow pattern forming a plurality of spaced apart rows of gas streams aligned with the rows of scrubbing nozzles (18; 78; 94).

5. The method according to claim 4 which includes
- positioning the rows of the scrubbing nozzles (18; 78; 94) in parallel spaced relation across the width of the scrubber (10; 38; 58; 65; 74; 93) and extending the length of the scrubber (10; 38; 58; 65; 74; 93) from the inlet (14) to the outlet (19), and
- partitioning the flow of the process gas through the scrubber (10; 38; 58; 65; 74; 93) in a flow pattern of partitioned gas streams aligned with the parallel rows of scrubbing nozzles (18; 78; 94).

6. The method according to at least one of claims 1 to 5 which includes positioning nozzles (21; 33; 84; 92) for supplying the ozone (32; 46; 61; 76; 91) to the scrubber (10; 38; 58; 65; 74; 93) oppositely of the selected partitioned gas streams for oxidation of a preselected percentage of the contaminants in the process gas stream (12; 30; 44; 59; 72; 85).

7. The method according to at least one of claims 1 to 6 which includes spraying the treated process gas stream (22; 40; 54; 69; 77; 101) with an aqueous medium (23; 39; 53; 64; 79; 98) emitted from rows of scrubbing nozzles (18; 78; 94) aligned with selected rows of partitioned gas streams containing oxidized contaminants.

8. The method according to at least one of claims 1 to 7 which includes capturing the oxidized contaminants removed from the selected partitioned gas streams in a capture device or separation device (28; 42; 56; 65; 83; 100) selected from the group consisting of a fabric filter, wet and dry electrostatic precipitators, a wet scrubber, a dry scrubber, a bag house, condensing surfaces, and a mist separator.

9. A method for the partial removal of contaminants from a process gas stream (12; 30; 44; 59; 72; 85), comprising the steps of:
- conditioning the process gas stream (12; 30; 44; 59; 72; 85) emitted from a combustion process,
- separating the process gas stream (12; 30; 44; 59; 72; 85) into a plurality of spaced apart partitioned gas streams containing contaminants,
- injecting ozone (32; 46; 61; 76; 91) into one or more of the partitioned gas streams to mix the ozone (32; 46; 61; 76; 91) with the contaminants in a preselected percentage of the entire process gas stream, in particular corresponding to the selected percentage of nitrogen oxides (NOₓ) to be removed from the gas stream,
- oxidizing the contaminants in the selected partitioned gas stream by mixing with the ozone (32; 46; 61; 76; 91),
- capturing the oxidized contaminants in a capture device or separation device (28; 42; 56; 65; 83; 100) to remove the contaminants from the selected partitioned gas stream, in particular by contacting the oxidized contaminants with an aqueous medium (23; 39; 53; 64; 79; 98), and
- reuniting the selected partitioned gas stream substantially free of contaminants with the remaining partitioned gas streams containing contaminants.

10. The method according to claim 9 which includes
- conveying the conditioned process gas stream to an inlet (14) of a scrubber (10; 38; 58; 65; 74; 93),
- distributing the process gas stream at the inlet (14) into a flow pattern forming the plurality of partitioned gas streams, and
- feeding the ozone (32; 46; 61; 76; 91) into contact with selected ones of the partitioned gas streams to oxidize the contaminants therein.

11. The method according to claim 9 or 10 which includes dividing the conditioned process gas stream at an inlet (14) of the scrubber (10; 38; 58; 65; 74; 93) free of any physical obstruction in the scrubber (10; 38; 58; 65; 74; 93) extending the length of the scrubber (10; 38; 58; 65; 74; 93) from the inlet (14) to an outlet (19) into the partitioned gas streams.

12. The method according to at least one of claims 9 to 11 which includes
- distributing the process gas stream (12; 30; 44; 59; 72; 85) entering an inlet (14) of the scrubber (10; 38; 58; 65; 74; 93) evenly across the inlet (14), in particular evenly throughout the width of the scrubber (10; 38; 58; 65; 74; 93), into the plurality of partitioned gas streams containing contaminants, and
- maintaining a flow pattern of partitioned gas streams from the inlet (14) through a chamber (15) of the scrubber (10; 38; 58; 65; 74; 93) to an outlet (19) of the scrubber (10; 38; 58; 65; 74; 93).

13. An apparatus for the partial removal of contaminants from a process gas stream (12; 30; 44; 59; 72; 85), comprising:
- a scrubber (10; 38; 58; 65; 74; 93) having an inlet (14) and an outlet (19) with a chamber (15) positioned there between,
- said chamber (15) being free of any obstructions diverting the flow of the process gas stream (12; 30; 44; 59; 72; 85) from said inlet (14) through said chamber (15) to said outlet (19),
- a gas distributor (16) positioned at said inlet (14) for receiving and evenly distributing the process gas stream (12; 30; 44; 59; 72; 85) across said inlet (14) entering said chamber (15) into a flow pattern of separated gas streams extending from said inlet (14) to said outlet (19),
- a source of ozone (32; 46; 61; 76; 91) positioned at said inlet (14) for injecting the ozone (32; 46; 61; 76; 91) into selected ones of said separated gas streams to oxidize a preselected percentage of the gas stream flowing through said chamber (15),
- a capture device or separation device (28; 42; 56; 65; 83; 100) positioned in said chamber (15) for receiving the oxidized gas streams before exiting through said outlet (19) to remove the oxidized contaminants from the gas streams, and
- said outlet (19) receiving the gas stream free of contaminants for mixing with the gas stream containing contaminants.

14. The apparatus according to claim 13 in which said separated gas streams are divided by said gas distributor (16) into a plurality of partitioned gas streams spaced apart in substantially parallel relation extending from said inlet (14) through said chamber (15) to said outlet (19).

15. The apparatus according to claim 13 or 14 which includes a preselected number of nozzles (21; 33; 84; 92) positioned downstream of said gas distributor (16) in said chamber (15) and positioned oppositely of selected ones of said separated gas streams for injecting the ozone (32; 46; 61; 76; 91) into said selected gas streams to oxidize a preselected percentage of the contaminants present in the process gas stream entering said scrubber (10; 38; 58; 65; 74; 93).
